# EUROPÄISCHE PATENTSCHRIFT

(11) **EP 3 695 426 B1**
(45) Veröffentlichungstag und Bekanntmachung des Hinweises auf die Patenterteilung: **23.10.2024**
(21) Anmeldenummer: 17790695.5
(22) Anmeldetag: 10.10.2017
(51) Int. Cl.: H01F 7/02, G01D 5/244, G01L 3/10, G01L 5/22

(54) **MAGNETANORDNUNG UND VERFAHREN ZU DEREN HERSTELLUNG**
MAGNET ARRANGEMENT AND METHOD FOR PRODUCING SAME
ARRANGEMENT D'AIMANT ET SON PROCÉDÉ DE FABRICATION

(43) Veröffentlichungstag der Anmeldung: 19.08.2020
(73) Patentinhaber: HELLA GmbH & Co. KGaA, 59557 Lippstadt (DE)
(72) Erfinder: SPARENBERG, Mathias, 59555 Lippstadt (DE); GOLTZ, Jürgen, 8181 Höri (CH)
(86) Internationale Anmeldenummer: PCT/EP2017/075763
(87) Internationale Veröffentlichungsnummer: WO 2019/072377

(56) Entgegenhaltungen:
- EP-A2- 2 570 787
- WO-A1-2017/120687
- WO-A1-2017/216051
- US-A1- 2009 058 403

## Beschreibung

### Gebiet der Erfindung

Die Erfindung betrifft eine Magnetanordnung, umfassend eine Trägerhülse, welche einen Bund mit einer Vorderseite und einer Rückseite aufweist, an welchem Bund ein ringförmiger kunststoffgebundener Dauermagnet an der Rückseite des Bundes direkt am Bund anliegend befestigt und mit dem Bund dauerhaft verbunden ist. Ferner betrifft die Erfindung ein Verfahren zur Herstellung einer Magnetanordnung.

### Hintergrund

Es ist bekannt, den magnetischen Teil einer Magnetanordnung, wie sie insbesondere für Drehmoment- und Drehwinkelsensoren zum Einsatz kommt, als sogenanntes hochgefülltes Kunststoffteil auszubilden, bei welchem in einer Kunststoffmatrix dauermagnetische Partikel eingebettet sind. Zur Bildung der Magnetanordnung wird ein solcher sogenannter "kunststoffgebundener Dauermagnet" mit einer metallischen Trägerhülse verbunden, welche der Montage der derart gebildeten Magnetanordnung auf einer Welle dient, die zum Beispiel als Teil der Lenksäule eines Fahrzeugs dient. EP 1 123 794 erläutert eine Lösung zur Verbindung des kunststoffgebundenen Dauermagnets mit der metallischen Trägerhülse bzw. mit einem metallischen Grundkörper, bei welcher das Kunststoffteil an den Grundkörper angespritzt wird. Diese Lösung kann gemäss EP 1 123 794 zum Abreissen des Kunststoffkörpers vom Grundkörper auf Grund wechselnder Wärmebelastung der Magnetanordnung führen. EP 1 123 794 schlägt zur Lösung dieses Problems vor, ein weiteres Bauelement in Form eines Zwischenelements aus elastischem Kunststoffmaterial zwischen dem Grundkörper und dem magnetischen Kunststoffteil vorzusehen, so dass das Kunststoffteil nicht unmittelbar, sondern über das Zwischenelement mit dem Grundkörper aus Metall verbunden ist. Eine derartige Lösung mit einem Zwischenelement wird auch von DE 10 2008 047 466 A1 vorgeschlagen, welches Dokument ebenfalls eine Magnetanordnung mit einem durch ein Kunststoff-Spritzgiessverfahren hergestellten Magnetring und einer metallischen Trägerhülse für den Magnetring betrifft. Die genannten Lösungen haben sich bewährt, sind aber aufwändig in der Herstellung. DE 198 36 451 A1 schlägt eine Lösung ohne Zwischenelement vor, bei der das hochgefüllte Kunststoffteil bzw. der kunststoffgebundene Dauermagnet direkt an den metallenen Grundkörper angespritzt wird, wobei dieser Grundkörper laschenförmige Teile aufweist, die sich in den kunststoffgebundenen Dauermagneten erstrecken. Mit dieser Lösung soll der Schrumpfung des Dauermagneten beim Erkalten nach dem Spritzgiessen begegnet werden, indem die laschenförmigen Teile die Schrumpfspannungen des Magnetmaterials nach dem Spritzgiessen durch Verbiegen der laschenförmigen Teile aufnehmen sollen. Beim Einsatz solcher Magnetanordnungen im Automobilbereich sind aber auch im Gebrauch grosse Temperaturunterschiede zu beachten. Solche Temperaturunterschiede können dazu führen, dass die Laschen das Magnetmaterial beschädigen. Schliesslich schlägt es DE 10 2009 039 082 A1 vor, den Magnetring separat herzustellen und mit Domen zu versehen. In einem zweiten Schritt werden der Magnetring und die Trägerhülse miteinander verbunden, indem die Dome durch Öffnungen im Bund der Trägerhülse geführt und die über die Trägerhülse hinausstehenden Bereiche der Dome verformt werden, so dass der kunststoffgebundene Dauermagnet analog einer Nietverbindung an der Trägerhülse befestigt wird. Auch bei dieser Lösung können wechselnde thermische Bedingungen im Langzeitbetrieb zu einem Versagen der Verbindung führen. In WO 2017/120687 A1 wird zur Befestigung des kunststoffgebundenen Dauermagnets am Flansch einer Hülse eine bajonettverschlussartige Formschlussverbindung vorgeschlagen. Zur Erzielung einer dauerhaften Verbindung wird ein zusätzliches Blockiermittel vorgesehen, was einen entsprechenden Herstellaufwand ergibt.

### Darstellung der Erfindung

Der Erfindung liegt die Aufgabe zu Grunde eine Magnetanordnung zu schaffen, welche wechselnden Wärmebelastungen widersteht und dennoch besonders einfach und kostengünstig herstellbar ist.

Diese Aufgabe wird bei der Magnetanordnung nach Anspruch 1 gelöst.

Somit wird gemäss der Erfindung bei einer Magnetanordnung, wie sie zum Beispiel für die Drehwinkel- und Drehmomentmessung insbesondere im Automobilbereich verwendet wird, ein kunststoffgebundener Dauermagnet mit einer Trägerhülse, und insbesondere einer metallenen Trägerhülse, derart verbunden, dass der kunststoffgebundene Dauermagnet direkt, ohne ein Zwischenteil, an einem Bund der Trägerhülse anliegt und dass Ausformungen des kunststoffgebundener Dauermagneten eine Formschlussverbindung zwischen Kunststoffteil und Trägerhülse bilden, welche diese in Richtung der gemeinsamen Mittelängsachse von Kunststoffteil und Trägerhülse verbindet, indem die Ausformungen durch Ausnehmungen des Bunds der Trägerhülse ragen und die Ausnehmungen übergreifen und direkt am Bund anliegen. Dabei ist ein Bereich der Ausnehmungen frei gehalten. Dieser Bereich wird in der Regel zwischen der Ausformung und dem zylindrischen Hülsenteil liegen, könnte aber auch Bereiche beidseits der Ausformung umfassen. Die Magnetanordnung erlaubt einerseits eine einfache Herstellbarkeit durch das direkte Anspritzen des kunststoffgebundenen Dauermagneten an die Trägerhülse in einem Spritzgusswerkzeug und andererseits ist sie auch unter Einsatzbedingungen mit Temperaturschwankungen dauerhaft, da Relativbewegungen zwischen den Ausformungen des kunststoffgebundenen Dauermagneten und der Trägerhülse ermöglicht werden. Der an die Trägerhülse angespritzte kunststoffgebundene Dauermagnet wird nach dem Anspritzen und Entformen auf herkömmliche Weise magnetisiert, was dem Fachmann bekannt ist und hier nicht weiter erläutert werden muss.

Vorzugsweise weist die Magnetanordnung zwei oder vier Ausnehmungen und zwei oder vier jeweils in diesen angeordnete Ausformungen auf, welche Ausnehmungen bzw. Ausformungen einander jeweils diametral an der Trägerhülse gegenüberliegend angeordnet sind. In einer anderen Ausführung können drei Ausnehmungen und drei Ausformungen vorgesehen sein, welche in gleichmässigem Abstand entlang der Trägerhülse vorgesehen sind. Bereits mit zwei Ausnehmungen und zugehörigen Ausformungen kann sich eine dauerhaft sichere Befestigung zwischen Trägerhülse und kunststoffgebundenem Dauermagneten ergeben. Werden mehr als zwei Ausnehmungen und Ausformungen vorgesehen, kann eine erhöhte Sicherheit der Befestigung erzielt werden.

Für die sichere Befestigung übergreift die jeweilige Ausformung die Ausnehmung beidseits der Ausnehmung und liegt somit beidseits der Ausnehmung des Bunds direkt an diesem bzw. an der Vorderseite an. Bevorzugt ist es weiter, dass die jeweilige Ausnehmung am Bund randseitig offen ist. Damit kann die Ausformung beim Anspritzen randbündig mit dem Bund der Trägerhülse gebildet werden. Der freie Bereich der Ausnehmung erstreckt sich in diesem Fall radial zwischen der Ausformung und dem zylindrischen Hülsenteil der Trägerhülse. Ein solches Beispiel wird nachfolgend genauer beschrieben.

Vorzugsweise sind die Ausnehmungen im Bund im Wesentlichen rechteckförmig. Eine andere Formgebung ist möglich, wobei diese von der Formgebung her grundsätzlich sicherstellen muss, dass die jeweilige Ausformung mit ihrem in der Ausnehmung liegenden Teil in radialer Richtung in der Ausnehmung bewegbar ist.

Der in radialer Richtung freie Bereich der Ausnehmung ist 0.5 mm bis 1.5 mm gross, insbesondere ca. 1.0 mm.

Der Erfindung liegt weiter die Aufgabe zu Grunde, ein einfaches und effizientes Herstellverfahren für eine verbesserte Magnetanordnung zu schaffen.

Dies wird gemäss der Erfindung dadurch erreicht, dass eine Trägerhülse mit einem stirnseitigen Bund, der eine Vorderseite und eine Rückseite und Ausnehmungen aufweist, in eine Kunststoffspritzgussform eingelegt wird, welche Kunststoffspritzgussform einen Formraum zur Bildung eines ringförmigen kunststoffgebundenen Dauermagneten an der Rückseite des Bundes und Formräume zur Bildung von Ausformungen des kunststoffgebundenen Dauermagneten in den Ausnehmungen des Bundes und an der Vorderseite des Bundes aufweist, welche Ausformungen jeweils den Bund an seiner Vorderseite anschliessend an die jeweilige Ausnehmung übergreifen und direkt am Bund anliegen, und die Kunststoffspritzgussform Formteile aufweist, welche in einen Teil der jeweiligen Ausnehmungen des Bundes eingreifen, damit jeweils mindestens ein in radialer Richtung am Innenrand der jeweiligen Ausnehmung liegender Bereich der Ausnehmungen von den Formteilen ausgefüllt ist, und dass eine mit magnetisierbaren Partikeln versehene Kunststoffmasse zur Bildung des ringförmigen Dauermagneten und dessen Ausformungen in die Kunststoffspritzgussform eingespritzt wird und dass nach Verfestigung des Kunststoffmaterials die Magnetanordnung entformt wird. Mindestens eine der Ausformungen des kunststoffgebundenen Dauermagneten ist in radialer Richtung R der Trägerhülse schmaler als die zugehörige Ausnehmung des Bunds, derart, dass ein Bereich der Ausnehmung in radialer Richtung zur Trägerhülse hin frei liegt, die jeweilige Ausformung die Ausnehmung beidseits der Ausnehmung übergreift und wobei der in radialer Richtung freie Bereich der Ausnehmung in radialer Richtung maximal 1.5 mm gross ist.

Es hat sich gezeigt, dass mit dem Verfahren eine unmittelbare Verbindung zwischen dem magnetischen Kunststoffteil und der Trägerhülse erzielbar ist, die eine dauerhafte und langzeitstabile Verbindung ergibt. Durch die unmittelbare Verbindung entfällt ein Zwischenelement und der Schritt zu dessen Herstellung, was die erfindungsgemässe Magnetanordnung effizienter und damit kostengünstiger herstellbar macht.

Mit dieser Herstellung wird erreicht, dass die Ausformung in radialer Richtung im Bund freigestellt ist, so dass sie grundsätzlich innerhalb der Ausnehmung bewegbar ist. Es zeigt sich, dass dadurch thermisch bedingte Relativbewegungen zwischen Dauermagnet und der, in der Regel metallischen, Trägerhülse, wie sie im Betrieb der Magnetanordnung auftreten können, dauerhaft beherrscht werden können, ohne dass eine Beschädigung des kunststoffgebundenen Dauermagneten erfolgt und somit ein Versagen der Magnetanordnung erfolgt. Die Lösung der Erfindung erlaubt ein direktes Anspritzen des kunststoffgebundenen Dauermagneten an die Trägerhülse und somit eine sehr kostengünstige und effiziente Herstellung ohne zusätzliche Teile.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigt:
Figur 1 eine schaubildliche Ansicht einer Trägerhülse für eine Magnetanordnung gemäss einem Ausführungsbeispiel der Erfindung;
Figur 2 eine schaubildliche Ansicht der Magnetanordnung gemäss dem Ausführungsbeispiel der Erfindung;
Figur 3 eine Draufsicht auf die Magnetanordnung von Figur 2;
Figur 4 eine Vertikalschnittansicht der Magnetanordnung von Figur 2;
Figur 5 eine Draufsicht auf ein schematisch dargestelltes Formwerkzeug zur Bildung der Magnetanordnung durch Spritzgiessen; und
Figur 6 einen Schnitt entlang der Schnittlinie C - C von Figur 5 zur Erläuterung des Anspritzens des kunststoffgebundenen Dauermagneten an die Trägerhülse mit Freihaltung eines Bereichs der jeweiligen Ausnehmung im Bund der Trägerhülse.

### Weg(e) zur Ausführung der Erfindung

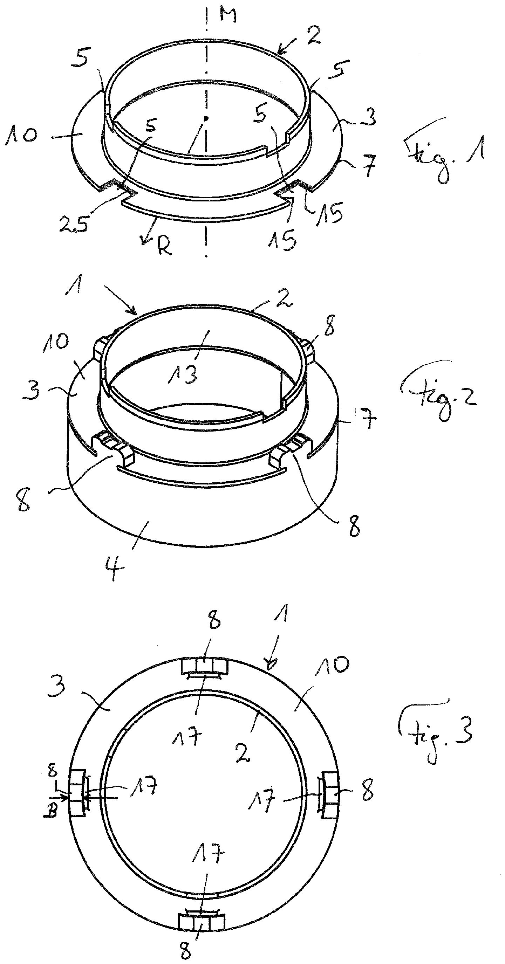

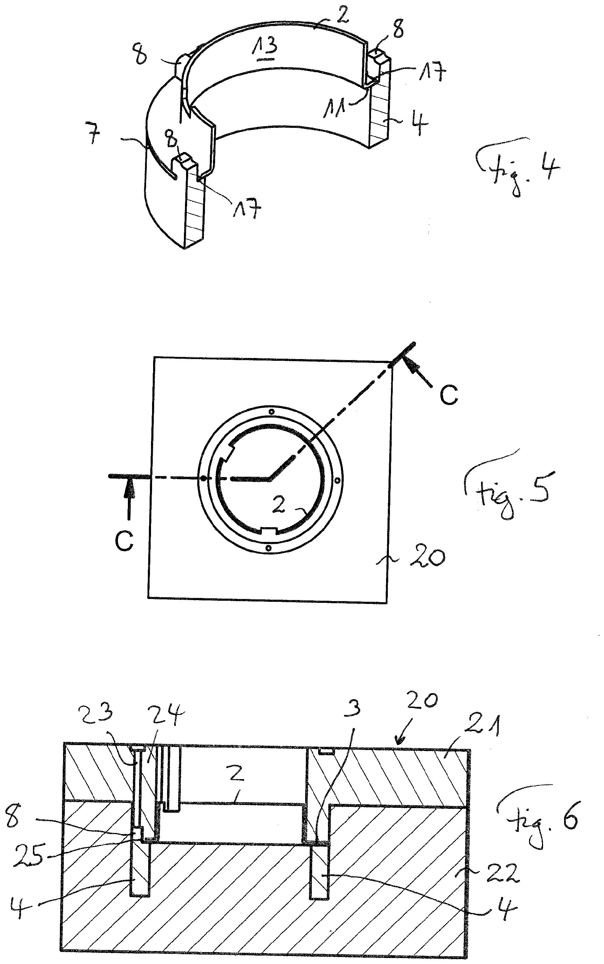

An Hand der Figuren 1 bis 6 werden Ausführungsbeispiele der Erfindung erläutert. Dabei zeigt Figur 1 ein Beispiel einer Trägerhülse 2 der Magnetanordnung 1 in schaubildlicher Darstellung. Die Trägerhülse 2 ist in der Regel aus Metall gebildet und weist einen in der Regel zylindrischen Hülsenteil 13 und einen Flansch bzw. Bund 3 auf. Die eine Seite des Bunds 3 kann als Vorderseite 10 und die andere Seite als Rückseite 11 (Figur 4) bezeichnet werden, wobei dies nur Bezeichnungen im Rahmen der vorliegenden Beschreibung sind und die beiden Seiten des Bundes auch umgekehrt als Vorder- bzw. Rückseite definiert werden könnten. Der Bund hat einen Umfang bzw. Rand 7. Die Rückseite 11 bildet die Anlage für das Anspritzen des kunststoffgebundenen Dauermagneten 4. Insoweit entspricht dies grundsätzlich dem bekannten Aufbau einer Magnetanordnung. Als radiale Richtung wird nachfolgend die von der Längsmittelachse M der Trägerhülse 2 nach aussen zum Rand 7 des Bunds 3 weisende Richtung R bezeichnet und als Beispiel ist in Figur 1 ein radialer Pfeil mit der Bezeichnung R eingetragen.

Eine Magnetanordnung 1 ist schaubildlich in Figur 2 dargestellt und weist ein ringförmiges Kunststoffteil auf, welches magnetische Eigenschaften hat, und welches als kunststoffgebundener Dauermagnet bezeichnet wird. Solche kunststoffgebundenen Dauermagnete sind dem Fachmann grundsätzlich bekannt und auch deren Herstellung durch Spritzgiessen. Der kunststoffgebundene Dauermagnet 4 weist, nach seiner Bildung bzw. Formgebung durch Spritzgiessen und nach einem darauf folgenden Magnetisierungsvorgang, entlang seines Umfangs eine Abfolge von magnetischen Nord- und Südpolen auf, welche in einer Drehwinkel- und Drehmomentmessanordnung von Magnetfeldsensoren detektiert werden können. Auch dies ist dem Fachmann bekannt und wird hier nicht weiter erläutert.

Der Bund 3 der Trägerhülse 2 gemäss der Erfindung weist Ausnehmungen 5 auf. Im gezeigten Beispiel sind dies vier Ausnehmungen 5, welche gleichmässig entlang des Umfangs bzw. Rands 7 des Bunds 3 angeordnet sind. Es können auch nur zwei Ausnehmungen vorhanden sein, welche sich zum Beispiel diametral gegenüberliegen, oder es können drei Ausnehmungen vorgesehen sein, oder allenfalls auch mehr als vier Ausnehmungen. Die Ausnehmungen weisen im Wesentlichen parallel verlaufende Seitenwände 15 und eine Rückwand 25 auf und können einen rechteckigen oder quadratischen Grundriss aufweisen. In Figur 1 ist der Grundriss als rechteckig ersichtlich. Auch ein Grundriss in Dreiecksform mit der Rückwand als längste Seite oder ein Grundriss in Parallellogrammform mit der Rückwand als längste Seite der Formgebung ist möglich. Bevorzugt sind die Ausnehmungen am Umfang bzw. Rand 7 des Bunds 3 offen, wie in Figur 1 dargestellt.

Der am Bund 3 angespritzte kunststoffgebundene Dauermagnet 4 weist Ausformungen 8 auf, welche jeweils durch die Ausnehmungen 5 hindurchragen und sich somit von der Rückseite 11 des Bunds 3 durch die Ausnehmung zur Vorderseite 10 des Bunds 3 erstrecken. Diese Ausformungen übergreifen an der Vorderseite 10 des Bunds mindestens eine der Seitenwände 15 der Ausnehmungen 5, vorzugsweise beide der Seitenwände 15, wie dargestellt und erstrecken sich damit über die Vorderseite 10. Dabei liegen die Ausformungen mit ihren die Seitenwände 15 übergreifenden Abschnitten direkt an der Vorderseite 10 des Bunds an und bilden somit eine formschlüssige feste Verbindung des kunststoffgebundenen Dauermagneten 4 mit dem Bund 3 und somit mit der Trägerhülse 2. Die Anzahl der Ausformungen 8 entspricht in der Regel der Anzahl der Ausnehmungen 5. Allenfalls können weniger Ausformungen als Ausnehmungen vorgesehen sein.

Die Ausformungen 8 des Dauermagneten 4 werden vorzugsweise direkt während des Anspritzvorgangs des Dauermagneten 4 an der Trägerhülse 2 bzw. am Bund 3 gebildet. Somit entstehen die Ausformungen 8 im selben Arbeitsgang im Formwerkzeug, bzw. in der Kunststoffspritzgussform, in welchem der zylindrische Teil des Dauermagneten 4 gebildet wird. Es ist aber auch möglich, dass zunächst in einem ersten Arbeitsgang der Teil des Dauermagneten 4 gebildet wird, der an der Rückseite 11 des Bunds 3 angespritzt wird und in einem separaten zweiten Arbeitsgang die Ausformungen 8 angespritzt werden. Allenfalls kann auch ein Teil der jeweiligen Ausformung im ersten Arbeitsgang und der Rest der Ausformung im zweiten Arbeitsgang gebildet werden. Bevorzugt ist aber die Bildung des Dauermagneten mit allen Ausformungen in einem einzigen Arbeitsgang.

Jedenfalls wird vorgesehen, dass die Ausformungen 8 in radialer Richtung der Trägerhülse gesehen jeweils eine geringere Breite aufweisen bzw. schmaler sind, als die zugehörige Ausnehmung 5, was in Figur 3 bei der Ausnehmung 8 links mit der Breite B dargestellt ist. Die jeweilige Ausnehmung 5 liegt somit in radialer Richtung R gesehen zwischen der Ausformung 8 und dem Hülsenteil frei. Dies ist in Figur 3 in Draufsicht auf die Magnetanordnung 1 gut ersichtlich, in welcher Figur die freibleibenden Bereiche 17 jeder Ausnehmung ersichtlich sind. Vorzugsweise sind solche freibleibenden Bereiche 17 bei jeder Ausnehmung vorgesehen. Der radiale Abstand zwischen der jeweiligen Ausformung 8 und der Rückwand 25 der Ausnehmung bzw. die jeweilige Breite des freibleibenden Bereichs 17 liegt vorzugsweise im Bereich von 0.5 Millimetern bis 1.5 Millimetern und insbesondere bei ca. 1 Millimeter.

Die freibleibenden Bereiche der Ausnehmungen stellen sicher, dass die durch Temperaturunterschiede bei der Verwendung der Magnetanordnung, insbesondere bei deren Verwendung im Automobilbereich, sich ergebende unterschiedliche Ausdehnung bzw. Kontraktion von Magnet 4 und Trägerhülse 2 stattfinden kann, ohne dass es zu einer Beschädigung der Verbindung zwischen diesen Teilen kommt.

Wie bereits erwähnt, erfolgt die Herstellung der Magnetanordnung durch Kunststoffspritzgiessen. Dies kann an Hand der Figuren 5 und 6 erläutert werden. Es wird eine Trägerhülse 2 in das in Figur 5 schematisch in Draufsicht dargestellte Formwerkzeug 20 eingelegt und der ringförmige kunststoffgebundene Dauermagnet mit den Ausformungen wird durch den dem Fachmann bekannten Spritzgussprozess an der Trägerhülse angeformt und damit Trägerhülse und Magnet mechanisch zur Magnetanordnung verbunden. Nach dem Entformen wird das Magnetmaterial des kunststoffgebundenen Dauermagneten auf bekannte Weise magnetisiert, womit die Magnetanordnung fertig hergestellt ist. In Figur 5 ist die Schnittlinie C - C dargestellt und in Figur 6 ist die entsprechende Schnittdarstellung gezeigt. Das Formwerkzeug 20 weist die Formteile 21 und 22 auf. Durch den Angusskanal 23 bzw. mehrere solche Kanäle wird das Kunststoffmaterial in den Formraum des Formwerkzeugs eingebracht. Damit wird der ringförmige Dauermagnet 4 mit den Ausformungen 8 gebildet, wobei in Figur 6 eine dieser Ausformungen ersichtlich ist. Dies erstreckt sich durch die zugehörige Ausnehmung im Bund der Trägerhülse 2. Ein Formstück 24 mit einem balkenförmigen Formteil 25 erstreckt sich jeweils bei jeder Ausnehmung des Bunds bis in diese hinein und bildet damit jeweils den Bereich 17, der durch das Formteil 25 vom Kunststoffmaterial frei gehalten wird. Entsprechend wird die Magnetanordnung durch den Spritzgussvorgang gemäss dem Beispiel von Figur 3 gebildet.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Magnetanordnung (1), umfassend eine Trägerhülse (2) aus Metall, welche einen Bund (3) mit einer Vorderseite und einer Rückseite aufweist, an welchem Bund ein ringförmiger kunststoffgebundener Dauermagnet (4) an der Rückseite des Bundes direkt am Bund anliegend befestigt und mit dem Bund dauerhaft verbunden ist, wobei der Bund Ausnehmungen (5) aufweist und der kunststoffgebundene Dauermagnet (4) durch die Ausnehmungen ragende Ausformungen (8) aufweist, welche jeweils den Bund an seiner Vorderseite anschliessend an die jeweilige Ausnehmung übergreifen und direkt an der Vorderseite am Bund anliegen, wobei mindestens eine der Ausformungen des kunststoffgebundenen Dauermagneten in radialer Richtung R der Trägerhülse schmaler als die zugehörige Ausnehmung des Bunds ist, derart, dass ein Bereich (17) der Ausnehmung in radialer Richtung zur Trägerhülse hin frei liegt, **dadurch gekennzeichnet, dass** die jeweilige Ausformung (8) die Ausnehmung (5) beidseits der Ausnehmung übergreift und wobei der in radialer Richtung freie Bereich (17) der Ausnehmung in radialer Richtung maximal 1.5 mm gross ist.

2. Magnetanordnung nach Anspruch 1, wobei zwei oder vier Ausnehmungen (5) und zwei oder vier Ausformungen (8) vorgesehen sind, welche einander jeweils diametral an der Trägerhülse gegenüberliegend angeordnet sind.

3. Magnetanordnung nach Anspruch 1, wobei drei Ausnehmungen und drei Ausformungen vorgesehen sind, welche in gleichmässigem Abstand entlang der Trägerhülse vorgesehen sind.

4. Magnetanordnung nach einem der Ansprüche 1 bis 3, wobei die jeweilige Ausnehmung am Bund randseitig offen ist und der kunststoffgebundene Dauermagnet mit den Ausformungen randbündig mit dem Rand (7) des Bundes ist.

5. Magnetanordnung nach einem der Ansprüche 1 bis 4, wobei die Ausnehmungen im Bund im Wesentlichen rechteckige oder quadratische Form aufweisen.

6. Magnetanordnung nach einem der Ansprüche 1 bis 5, wobei der in radialer Richtung freie Bereich (17) der Ausnehmung in radialer Richtung 0.5 mm bis 1.5 mm gross ist, insbesondere ca. 1.0 mm.

7. Magnetanordnung nach einem der Ansprüche 1 bis 6, wobei mehr als eine der Ausformungen des kunststoffgebundenen Dauermagneten, und wobei insbesondere alle der Ausformungen des kunststoffgebundenen Dauermagneten, in radialer Richtung R der Trägerhülse schmaler als die zugehörige Ausnehmung des Bunds sind.

8. Verfahren zur Herstellung einer Magnetanordnung nach einem der Ansprüche 1 bis 7, wobei eine Trägerhülse (2) mit einem Bund (3), der eine Vorderseite und eine Rückseite und Ausnehmungen aufweist, in eine Kunststoffspritzgussform (20) eingelegt wird, welche Kunststoffspritzgussform einen Formraum zur Bildung eines ringförmigen kunststoffgebundenen Dauermagneten an der Rückseite des Bundes und zur Bildung von Ausformungen des kunststoffgebundenen Dauermagneten in den Ausnehmungen des Bundes aufweist, welche Ausformungen jeweils den Bund an seiner Vorderseite anschliessend an die jeweilige Ausnehmung übergreifen und direkt am Bund anliegen, und die Kunststoffspritzgussform Formteile (25) aufweist, welche in einen Teil der jeweiligen Ausnehmungen des Bundes eingreifen, damit jeweils mindestens ein in radialer Richtung gelegener Bereich der Ausnehmungen von diesen Formteilen ausgefüllt ist, und dass eine mit magnetisierbaren Partikeln versehene Kunststoffmasse zur Bildung des ringförmigen Dauermagneten und dessen Ausformungen in die Kunststoffspritzgussform eingespritzt wird und dass nach Verfestigung des Kunststoffmaterials die Magnetanordnung entformt wird,
wobei mindestens eine der Ausformungen des kunststoffgebundenen Dauermagneten in radialer Richtung R der Trägerhülse schmaler als die zugehörige Ausnehmung des Bunds ist, derart, dass ein Bereich (17) der Ausnehmung in radialer Richtung zur Trägerhülse hin frei liegt, die jeweilige Ausformung (8) die Ausnehmung (5) beidseits der Ausnehmung übergreift und wobei der in radialer Richtung freie Bereich (17) der Ausnehmung in radialer Richtung maximal 1.5 mm gross ist.

## Claims

1. Magnet arrangement (1) comprising a carrier sleeve (2) made of metal featuring a flange (3) with a front and a back to which flange a ring-shaped plastic-bonded permanent magnet (4) is fixed directly on the back of the flange so as to make contact with the flange and is permanently attached to the flange, wherein the flange features recesses (5) and the plastic-bonded permanent magnet (4) features mouldings (8) protruding through the recesses, each of which then overlap the front of the flange at the respective recesses and make direct contact to the front of the flange, wherein at least one of the recesses of the plastic-bonded permanent magnets is narrower in a radial direction R of the carrier sleeve than the associated recess of the flange in such a way that one area (17) of the recess is exposed in a radial direction to the carrier sleeve, **characterized in that** the respective moulding (8) overlaps the recess (5) on both sides of the recess and wherein the area (17) of the recess exposed in a radial direction is no bigger than 1.5 mm in a radial direction.

2. Magnet arrangement in accordance with Claim 1, wherein two or four recesses (5) and two or four mouldings (8) are provided for, which are each arranged diametrically opposed to each other on the carrier sleeve.

3. Magnet arrangement in accordance with Claim 1, wherein three recesses and three mouldings are provided for, which are provided for at equal distances along the carrier sleeve.

4. Magnet arrangement in accordance with one of Claims 1 through 3,
wherein the respective recess is open at the edge of the flange and the plastic-bonded permanent magnet with the mouldings is aligned flush with the edge (7) of the flange.

5. Magnet arrangement in accordance with one of Claims 1 through 4, wherein the recesses in the flange feature essentially rectangular or square shapes.

6. Magnet arrangement in accordance with one of Claims 1 through 5,
wherein the area (17) of the recess exposed in a radial direction is 0.5 mm to 1.5 mm in size in a radial direction, specifically approx. 1.0 mm.

7. Magnet arrangement in accordance with one of Claims 1 through 6, wherein more than one of the mouldings of the plastic-bonded permanent magnet and wherein in particular all the mouldings of the plastic-bonded permanent magnet are narrower in a radial direction R of the carrier sleeve than the associated recess of the flange.

8. Method for creating a magnet arrangement in accordance with one of Claims 1 through 7, wherein a carrier sleeve (2) with a flange (3) that features a front and a back and recesses, is inserted into a plastic injection mould (20), which plastic injection mould features a moulding cavity for forming a ring-shaped plastic-bonded permanent magnet at the back of the flange and for forming mouldings of the plastic-bonded permanent magnet in the recesses of the flange, each of which mouldings overlap the flange on its front then engage in the respective recess and make direct contact with the flange, and the plastic injection mould features mould parts (25) which engage in one part of the respective recesses of the flange, so that in each case at least one area of the recesses located in a radial direction is filled by these moulded shapes, and in that a plastic mass provided with magnetisable particles is injected into the injection mould to form the ring-shaped permanent magnet and its mouldings and in that the magnet arrangement is removed from the mould once the plastic material has solidified,
wherein at least one of the mouldings of the plastic-bonded permanent magnet is narrower in a radial direction R of the carrier sleeve than the associated recess of the flange in such a way that one area (17) of the recess is exposed in a radial direction to the carrier sleeve, the respective moulding (8) overlaps the recess (5) on both sides of the recess and wherein the area (17) of the recess exposed in a radial direction is no more than 1.5 mm in size in a radial direction.

## Revendications

1. Agencement d'aimant (1), comprenant une douille support (2) en métal qui présente une collerette (3) avec une face avant et une face arrière sur laquelle un aimant permanent (4) annulaire lié par matière plastique est fixé directement sur la face arrière de la collerette et relié de manière durable à la collerette, celle-ci présentant des évidements (5) et l'aimant permanent (4) lié par matière plastique présentant des excroissances (8) faisant saillie à travers les évidements, qui recouvrent respectivement la collerette sur sa face avant à la suite de l'évidement respectif et s'appliquent directement sur la face avant de la collerette, au moins l'une des excroissances de l'aimant permanent lié par matière plastique étant plus étroite dans la direction radiale R de la douille support que l'évidement correspondant de la collerette, de telle sorte qu'une zone (17) de l'évidement est libre dans la direction radiale vers la douille support, **caractérisé en ce que** l'excroissance respective (8) recouvre l'évidement (5) des deux côtés de l'évidement et la zone (17) libre dans la direction radiale de l'évidement étant au maximum de 1,5 mm.

2. Agencement d'aimant selon la revendication 1 dans lequel sont prévus deux ou quatre évidements (5) et deux ou quatre excroissances (8) respectivement disposés de manière diamétralement opposée sur la douille support.

3. Agencement d'aimant selon la revendication 1 dans lequel sont prévus trois évidements et trois excroissances prévus à intervalles réguliers le long de la douille support.

4. Agencement d'aimant selon l'une des revendications 1 à 3 dans lequel l'évidement respectif sur la collerette est ouvert du côté du bord et l'aimant permanent lié par matière plastique avec les excroissances est à fleur du bord (7) de la collerette.

5. Agencement d'aimant selon l'une des revendications 1 à 4 dans lequel les évidements dans la collerette sont de forme sensiblement rectangulaire ou carrée.

6. Agencement d'aimant selon l'une des revendications 1 à 5 dans lequel taille de la zone (17) libre en direction radiale de l'évidement est de 0,5 mm à 1,5 mm, en particulier d'env. 1,0 mm.

7. Agencement d'aimant selon l'une des revendications 1 à 6 dans lequel plus d'une des excroissances de l'aimant permanent lié par matière synthétique, et dans lequel en particulier toutes les excroissances de l'aimant permanent lié par matière synthétique sont plus étroites dans la direction radiale R de la douille support que l'évidement correspondant de la collerette.

8. Procédé de fabrication d'un agencement d'aimant selon l'une des revendications 1 à 7 dans lequel une douille support (2), avec une collerette (3) présentant une face avant et une face arrière et des évidements, est placée dans un moule d'injection de matière plastique (20), lequel moule d'injection de matière plastique présente un espace de moulage pour la formation d'un aimant permanent annulaire lié par matière plastique sur la face arrière de la collerette et pour la formation d'excroissances de l'aimant permanent lié par matière plastique dans les évidements de la collerette, lesquels moulages recouvrent respectivement la collerette sur sa face avant à la suite de l'évidement respectif et s'appliquent directement sur la collerette, et le moule d'injection de matière plastique présentant des pièces moulées (25) qui s'engagent dans une partie des évidements respectifs de la collerette, afin qu'au moins une zone des évidements située dans la direction radiale soit respectivement remplie par ces pièces moulées, et en ce qu'une masse de matière plastique pourvue de particules magnétisables est injectée dans le moule d'injection de matière plastique pour former l'aimant permanent annulaire et ses évidements, et en ce qu'après solidification de la matière plastique, l'agencement d'aimant est démoulé,
sachant qu'au moins l'une des excroissances de l'aimant permanent lié par matière plastique est plus étroite dans la direction radiale R de la douille support que l'évidement correspondant de la collerette, de telle sorte qu'une zone (17) de l'évidement est libre dans la direction radiale vers la douille support, l'excroissance respective (8) recouvrant l'évidement (5) des deux côtés de l'évidement et dans lequel la zone (17) libre dans la direction radiale de l'évidement a une taille maximale de 1,5 mm dans la direction radiale.
